# EUROPEAN PATENT SPECIFICATION

(11) **EP 2 515 008 B1**
(45) Date of publication and mention of the grant of the patent: **06.09.2017**
(21) Application number: 11195463.2
(22) Date of filing: 23.12.2011
(51) Int. Cl.: F16H 61/28, F16H 61/32, F16H 61/04

(54) **Transmission apparatus and saddle-riding type vehicle**
Getriebevorrichtung und Grätschsitzfahrzeug
Appareil de transmission et véhicule de type à enfourcher

(30) Priority: 20.04.2011 JP 2011094414
(43) Date of publication of application: 24.10.2012
(73) Proprietor: Yamaha Hatsudoki Kabushiki Kaisha, Iwata-shi, Shizuoka 438-8501 (JP)
(72) Inventor: Ohata, Shinobu, Iwata-shi, Shizuoka 438-8501 (JP); Minami, Kengo, Iwata-shi, Shizuoka 438-8501 (JP)
(74) Representative: Grünecker Patent- und Rechtsanwälte PartG mbB

(56) References cited:
- EP-A1- 1 271 010
- DE-A1-102008 000 642
- US-A1- 2010 082 210

## Description

The present invention relates to a transmission apparatus and a saddle-riding type vehicle, and in particular to movement control of a movable gear included in a dog clutch transmission mechanism.

Conventionally, two-wheeled motor vehicles having a dog clutch transmission mechanism, for performing a shift operation using an actuator have been known.

A dog clutch transmission mechanism has a stationary gear capable of relative rotation relative to a shaft but incapable of movement in the shaft direction, and a movable gear incapable of relative rotation relative to a shaft but capable of movement in the shaft direction, and mutually engageable dogs are formed on the respective lateral surfaces of the movable gear and the stationary gear. In such a transmission mechanism, in shifting, engagement between the dog of a stationary gear for a speed before shifting (hereinafter referred to as a pre-shifting stationary gear) and the dog of a movable gear is released (a dog disengaged stage). Thereafter, the dog of the above mentioned or different movable gear is engaged with the dog of a stationary gear for a speed after shifting (hereinafter referred to as a post-shifting stationary gear) (a dog engaged stage). In the above, the dog of the movable gear may bump into the dog of the post-shifting stationary gear (a dog bumping stage) before the dog engaged stage.
Patent Document 1: Japanese Patent Laid-open Publication No. Hei 11-148551
Patent Document 2: US 2010/0 082 210 A1
Patent Document 3: DE 10 2008 000 642 A1

Patent Document 1 describes that a sleeve is moved at a high speed to realize prompt shifting, and that braking is applied to a drive motor when the sleeve reaches a dowel-in position to thereby modify the impact in bumping between a shift spindle and a stopper.
Patent Document 2 describes a shift controller with a shift drum. The shift controller moves the shift drum based on the temperature of the lubrication which has influence on the viscosity. The transmission disclosed in this document has all the features of the preamble of claims 1 and 6. Patent Document 3 describes a shift controller which is provided with a speed control means and a dog clutch can be disengaged from a first stationary gear with a high first speed until a neutral position and then engaged again with a second dog clutch of a stationary gear with a lower second speed to avoid noise.

According to Patent Document 1, "dowel-in" is defined as that a dowel of the sleeve is fit into a slot formed on the gear, and the dog bumping stage mentioned above corresponds to a stage in which the dowel of the sleeve bumps into a part other than the slot on the gear. In view of the above, braking when the sleeve reaches a dowel-in position means braking after the dog bumping stage. That is, the dowel of the sleeve has already bumped into the part other than the slot on the gear at a high speed. In bumping, a friction force is caused between the dowel of the sleeve and the part other than the slot on the gear, and the friction force hinders relative movement of the two. This results in delay in engagement between the dowel and the slot, as a result of which prompt shifting may not be realized. This problem becomes more remarkable as the moving speed of the sleeve is increased for the purpose of realizing prompt shifting.

Further, Patent Document 1 describes that re-pushing control is performed when shift change is not duly performed. In the re-pushing control, a sleeve pushing torque is temporarily weakened, and then increased so that the sleeve is pushed again with a stronger torque. Note that shift change not being duly performed refers to the sleeve not reaching the dowel-in position, with the dowel of the sleeve left bumping on the part other than the slot on the gear. According to Patent Document 1, the dowel of the sleeve has already bumped into the part other than the slot on the gear at a high speed. Change in strength of the pushing torque after such high speed bumping will not contribute to prompt shifting as the change is applied after the relative speed of the two have already dropped.

Moreover, such a problem becomes more remarkable as a force to be applied to a movable gear is increased to release the engagement at the dog disengaged stage. That is, a large load is kept being applied to the actuator that drives the movable gear until the engagement between the dog of the pre-shifting stationary gear and that of the movable gear is released, and at the moment when the engagement is released, the load turns to be a force pushing the movable gear toward the post-shifting stationary gear. Consequently, the dog of the movable gear fiercely bumps into the dog of the post-shifting stationary gear. In this case, remarkable delay is caused in shifting from the dog bumping stage to the dog engaged stage. Regarding this point, Patent Document 1 does not include a description on the dog disengaged stage. In this view, it is considered that the speed at which the dowel of the sleeve bumps into the part other than the slot is originally not so high that delays engagement.

At the dog disengaged stage, when a relatively small load is applied to the actuator, the engagement between the dog of the pre-shifting stationary gear and the dog of the movable gear may be released. In this case, the moving speed of the movable gear moving toward the post-shifting stationary gear becomes slower, which may hinder achievement of prompt shifting.

The present invention has been conceived in view of the above described problem, and aims to provide a transmission apparatus and a saddle-riding type vehicle capable of prompt shifting and modification of the impact in bumping between dogs.

### [Means for Solving the Problems]

In order to achieve the above described object, according to one aspect of the present invention, there is provided a transmission apparatus comprising a dog clutch transmission mechanism, an actuator, and a control device for driving the actuator. The transmission mechanism includes a first stationary gear capable of relative rotation relative to a shaft and incapable of movement in a shaft direction, a second stationary gear capable of relative rotation relative to the shaft and incapable of movement in the shaft direction, and a movable gear provided on the shaft between the first stationary gear and the second stationary gear, and incapable of relative rotation relative to the shaft and capable of movement in the shaft direction. A dog for being engaged with a dog formed on a lateral surface of the first stationary gear to transmit rotation of the shaft to the first stationary gear is formed on one lateral surface of the movable gear. A dog for being engaged with a dog formed on a lateral surface of the second stationary gear to transmit the rotation of the shaft to the second stationary gear is formed on another lateral surface of the movable gear. When the movable gear moves from a state in which the dog thereof is engaged with the dog of the first stationary gear toward the second stationary gear, the engagement between the dog of the first stationary gear and the dog of the movable gear is released and thereafter the dog of the movable gear is engaged with the dog of the second stationary gear. The actuator moves the movable gear in the shaft direction. The control device obtains speed information indicating the moving speed of the movable gear, and carries out speed control so as to apply a force toward the first stationary gear to the movable gear when the moving speed of the movable gear moving toward the second stationary gear is larger than a predetermined value, and a force toward the second stationary gear to the movable gear when the moving speed of the movable gear moving toward the second stationary gear is smaller than the predetermined value.

According to another aspect of the present invention, there is provided a transmission apparatus comprising a dog clutch transmission mechanism, an actuator, and a control device for driving the actuator. The transmission device includes a first stationary gear, a first movable gear, a second stationary gear, a second movable gear, and a shift cam. The first stationary gear is capable of relative rotation relative to a shaft and incapable of movement in the shaft direction. The first movable gear is provided to the shaft where the first stationary gear is provided and incapable of relative rotation relative to the shaft and capable of movement in the shaft direction. The second stationary gear is capable of relative rotation relative to the shaft where the first stationary gear is provided or a different shaft, and incapable of movement in a shaft direction. The second movable gear is provided to the shaft where the second stationary gear is provided, and incapable of relative rotation relative to the shaft and capable of movement in the shaft direction. The shift cam moves the first movable gear and the second movable gear in the shaft direction. A dog for being engaged with a dog formed on a lateral surface of the first stationary gear to transmit rotation of the shaft where the first stationary gear is provided to the first stationary gear is formed on a lateral surface of the first movable gear that is opposed to the first stationary gear. A dog for being engaged with a dog formed on a lateral surface of the second stationary gear to transmit rotation of the shaft where the second stationary gear is provided to the second stationary gear is formed on a lateral surface of the second movable gear that is opposed to the second stationary gear. When the second movable gear moves toward the second stationary gear from a state in which the dog of the first stationary gear engaged with the dog of the first movable gear, the engagement between the dog of the first stationary gear and the dog of the first movable gear is released and thereafter the dog of the second movable gear is engaged with the dog of the second stationary gear. The actuator drives the shift cam. The control device obtains speed information indicating the moving speed of the second movable gear, and carries out speed control. In the speed control, the control device applies a force toward the second stationary gear to the second movable gear when the moving speed of the second movable gear moving toward the second stationary gear is smaller than a predetermined value. Further, the control device applies a force departing from the second stationary gear to the second movable gear when the moving speed of the second movable gear moving toward the second stationary gear is larger than the predetermined value.

According to a further aspect of the present invention, there is provided a saddle-riding type vehicle having the above described transmission apparatus. A saddle-riding type vehicle is a vehicle in which a user straddles a seat to sit thereon, being, e.g., a two-wheeled motor vehicle (including a scooter), an all-terrain vehicle, a snowmobile, and so forth.

According to the present invention, when the moving speed of the movable gear moving toward the second stationary gear is larger than a predetermined value, application of a force toward the first stationary gear to the movable gear can modify the bump between the dogs, to thereby realize prompt shifting. Meanwhile, when the moving speed of the movable gear moving toward the second stationary gear is smaller than a predetermined value, application of a force toward the second stationary gear to the movable gear can realize prompt shifting.
Fig. 1 is a side view of a two-wheeled motor vehicle;
Fig. 2 is a schematic diagram of a torque transmission path;
Fig. 3A is a diagram explaining a dog disengaged stage;
Fig. 3B is a diagram explaining a dog bumping stage;
Fig. 3C is a diagram explaining a dog engaged stage;
Fig. 4 is a block diagram showing an example structure of a transmission apparatus;
Fig. 5 is a block diagram showing an example functional structure of a control device;
Fig. 6 is a flowchart of an example operation of the control device;
Fig. 7 is a timing chart of an example operation of the control device;
Fig. 8 is a diagram showing a relationship between a rotation speed and a duty ratio;
Fig. 9 is a timing chart of an example operation of the control device; and
Fig. 10 is a timing chart of an example operation of the control device.

An embodiment of a transmission apparatus and a saddle-riding type vehicle according to an embodiment of the present invention will be described referring to the accompanying drawings.

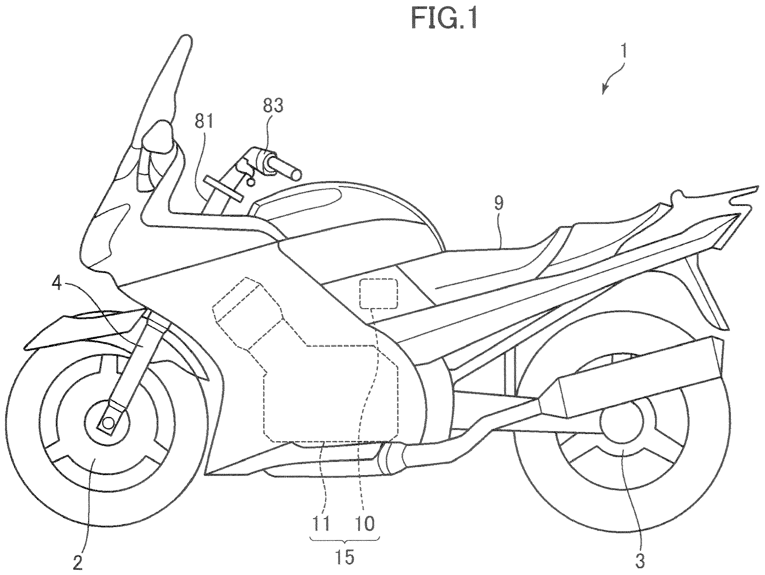

Fig. 1 is a side view of a two-wheeled motor vehicle 1. The two-wheeled motor vehicle 1 is one example of a saddle-riding type vehicle according to the present invention, and has an engine unit 11. A front wheel 2 provided in the forward direction of the engine unit 11 is supported by the lower end of a front fork 4. A steering shaft 81 rotatably supported at the forwardmost part of a vehicle frame (not shown) is connected to an upper part of the front fort 4. A steering 83 is mounted on an upper part of the steering shaft 81. The steering 83, the front fork 4, and the front wheel 2 are provided so as to integrally rotate in the left-right direction with the steering shaft 81 as the center. A seat 9 on which a passenger can straddle to sit thereon is mounted behind the steering 83. A rear wheel 3 is provided to the rear of the engine unit 11. A torque output from the engine unit 11 is transmitted to the rear wheel 3 through a torque transmitting member (not shown), such as a chain, a belt, and a shaft. A control device 10 is provided to the two-wheeled motor vehicle 1. The engine unit 11 and the control device 10 constitute a transmission apparatus 15 according to one example of the present invention.

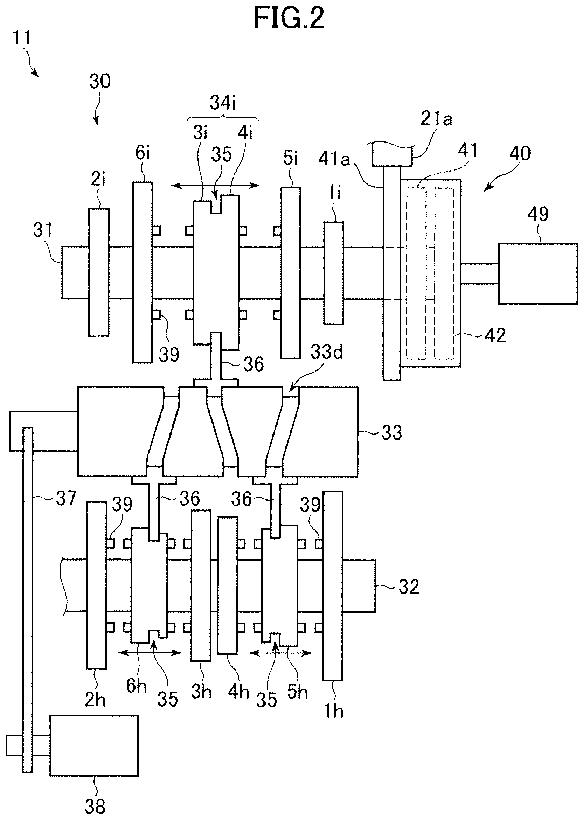

Fig. 2 is a diagram schematically showing a torque transmission path. The engine unit 11 comprises a clutch 40, a dog clutch transmission mechanism 30, and a shift actuator 38. The clutch 40 has a driving member 41 capable of relative rotation relative to the input shaft 31 of the transmission mechanism 30. The driving member 41 of the clutch 40 has a primary gear 41a, which is engaged with a primary gear 21a mounted on a crank shaft (not shown). The clutch 40 has a following member 42 incapable of relative rotation relative to the input shaft 31 of the transmission mechanism 30. The clutch 40 is, e . g. , a single-plate or multi-plate friction clutch. The driving member 41 and the following member 42 are pressed to each other in the shaft direction so that torque is transmitted between the two members 41, 42. The driving member 41 may be, e.g., a friction disk, while the following member 42 may be, e.g., a clutch disk.

The clutch 40 has a clutch actuator 49 for changing the state of engagement between the driving member 41 and the following member 42 according to an instruction from the control device 10. The clutch actuator 49 comprises, e.g., an electric motor. A driving force of the electric motor is transmitted to either one of the driving member 41 and the following member 42 by means of hydraulic pressure or a rod to press or separate the driving member 41 and the following member 42 with respect to each other.

The transmission mechanism 30 comprises the input shaft 31 having a plurality of gears 1i to 6i mounted thereon, an output shaft 32 having a plurality of gears 1h to 6h mounted thereon to be engaged with these gears 1i to 6i, and a shift cam 33 having a shift fork 36. The input shaft 31 is connected to the following member 42 of the clutch 40, while the output shaft 32 is connected to the wheel shaft of the rear wheel 3 via a torque transmitting member, such as a chain, a belt, and a shaft. The gear 1i is engaged with the gear 1h with a shift reduction rate corresponding to the first speed. The gear 2i is engaged with the gear 2h with a shift reduction rate corresponding to the second speed. The gear 3i is engaged with the gear 3h with a shift reduction rate corresponding to the third speed. The gear 4i is engaged with the gear 4h with a shift reduction rate corresponding to the fourth speed. The gear 5i is engaged with the gear 5h with a shift reduction rate corresponding to the fifth speed. The gear 6i is engaged with the gear 6h, with the shift reduction rate thereof gears corresponding to the sixth speed.

Of each gear pair corresponding to a respective shift step, one gear is capable of relative rotation relative to the shaft where the gear is provided, while the other gear is engaged spline with the shaft where the gear is provided and thus incapable of relative rotation relative to that shaft. In this embodiment, the gears 1i to 4i are incapable of relative rotation relative to the input shaft 31, while the gears 1h to 4h are capable of relative rotation relative to the output shaft 32. The gears 5i, 6i are capable of relative rotation relative to the input shaft 31, while the gears 5h, 6h are incapable of relative rotation relative to the output shaft 32. Accordingly, in a neutral condition with no particular shift step set, the gear parts 1i-1h to 4i-4h follow the input shaft 31, while the gear pairs 5i-5h, 6i-6h follow the output shaft 32. Note that the gears 3i and 4i are integrally formed (hereinafter referred to as a gear 34i).

The gear capable of relative rotation relative to the shaft is incapable of movement in the shaft direction of the shaft where the gear is provided, and is thus referred to as a stationary gear. Meanwhile, some of the gears incapable of relative rotation relative to the shaft are capable of movement in the shaft direction of the shaft where the gear is provided, and is thus referred to as a movable gear. A movable gear can move between two stationary gears. In this embodiment, the gears 5i, 6i, 1h to 4h are stationary gears, while the gears 34i, 5h, 6h are movable gears. The gear 34i can move between the gears 5i and 6i in the shaft direction of the input shaft 31. The gear 5h can move between the gears 1h and 4h in the shaft direction of the output shaft 32. The gear 6h can move between the gears 2h and 3h in the shaft direction of the output shaft 32. Each gear 34i, 5h, 6h, being movable gears, has an engagement slot 35 formed thereon, in which a shift fork 36 provided to the shift cam 33 is fit.

The movable gear is engageable with the stationary gear by means of a dog clutch. In this embodiment, a dog 39 is formed on each of the both lateral sides of each gear 34i, 5h, 6h, being a movable gear, while a dog 39 is formed on a lateral side of each gear 5i, 6i, 1h to 4h, or a stationary gear, that faces a movable gear. With the dogs 39 engaged with each other, a torque from the input shaft 31 is transmitted to the output shaft 32. For example, with the dog 39 of the gear 34i engaged with the dog 39 of the gear 5i, rotation of the input shaft 31 is transmitted from the gear 34i via the dogs 39 to the gear 5i, which in turn rotates integrally with the input shaft 31.

A plurality of cam slots 33d are formed on the shift cam 33, of which positions in the shaft direction vary depending on the rotation angle. The shift fork 36 is fit in the respective cam slot 33d. The shift cam 33 is connected to the shift actuator 38 via the shift rod 37, and the shift actuator 38 generates a drive force for rotating the shift cam 33. The shift actuator 38 comprises, e.g., an electric motor. With the shift actuator 38 rotating, the rotation is transmitted via the shift rod 37 to the shift cam 33, which in turn rotates. The rotation of the shift cam 33 is converted into movement in the shaft direction of the shift fork 36 fit in the cam slot 33d. As a result, the gears 34i, 5h, 6h, being movable gears, move in the shaft direction, whereby the shift steps are switched. As described above, the gears 34i, 5h, 6h, being movable gears, move in the shaft direction by a drive force generated by the shift actuator 38.

In shifting, a state in which a movable gear is engaged with a stationary gear for a speed before the shifting (pre-shifting stationary gear) is switched to a state in which a movable gear is engaged with a stationary gear for a speed after the shifting (post-shifting stationary gear). According to a first shifting aspect, a movable gear engaged with a pre-shifting stationary gear is the same as a movable gear engaged with a post-shifting stationary gear. For example, in shifting from the second speed to the third speed, the gear 6h moves from a state in which the gear 6h is engaged with the gear 2h toward the gear 3h and then is engaged with the gear 3h. In switching from the fifth speed to the sixth speed, the gear 34i moves from a state in which the gear 34i is engaged with the gear 5i toward the gear 6i and then is engaged with the gear 6i.

Meanwhile, according to a second shifting aspect, a movable gear engaged with a pre-shifting stationary gear is different from a movable gear engaged with a post-shifting stationary gear. For example, in shifting from the first speed to the second speed, the gear 5h moves from a state in which the gear 6h is engaged with the gear 1h so as to depart from the gear 1h, and the gear 6h then moves toward the gear 2h and is engaged with the gear 2h. In shifting from the third speed to the forth gear, the gear 6h moves from a state in which the gear 6h is engaged with the gear 3h so as to depart from the gear 3h, and the gear 5h then moves toward the gear 4h and is engaged with the gear 4h. In shifting from the fourth speed to the fifth speed, the gear 5h moves from a state in which the gear 5h is engaged with the gear 4h so as to depart from the gear 4h, and the gear 34i then moves toward the gear 5i and is engaged with the gear 5i.

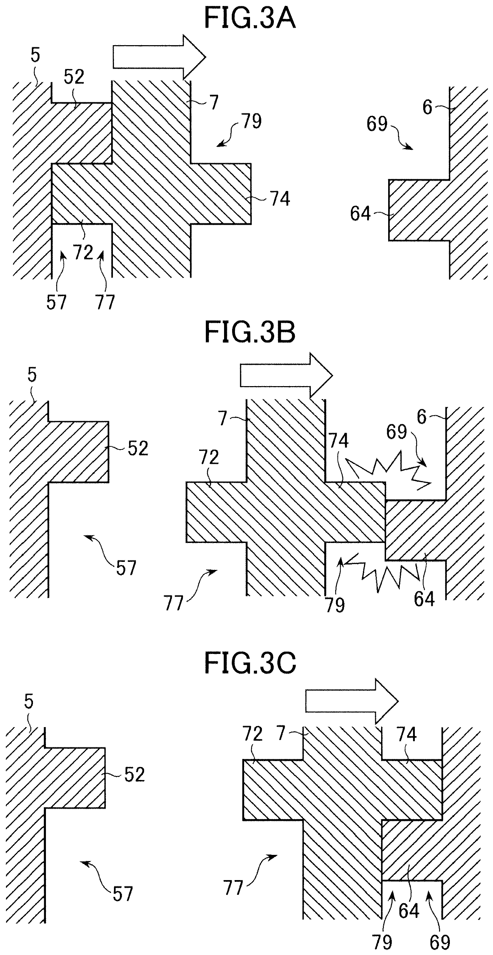

In switching the engagement between a movable gear and a stationary gear, as described above, the movable gear sequentially experiences three stages (a dog disengaged stage, a dog bumping stage, a dog engaged stage) to be described below. Fig. 3A is a diagram showing a dog disengaged stage; Fig. 3B is a diagram showing a dog bumping stage; and Fig. 3C is a diagram showing a dog engaged stage. These diagrams are schematic diagrams with a gear rotation direction in the up-down direction thereof. An arrow in these diagrams indicates the moving direction of the movable gear 7 moving toward the second stationary gear 6. The movable gear 7 corresponds to the respective gears 34i, 5h, 6h in Fig. 2, and the first stationary gear 5 and the second stationary gear 6 correspond to the respective gears 5i, 6i, 1h to 4h in Fig. 2. The first stationary gear 5 corresponds to a pre-shifting stationary gear, while the second stationary gear 6 corresponds to a post-shifting stationary gear.

A dog 72 is formed on a lateral surface of the movable gear 7 that faces the first stationary gear 5, projecting toward the first stationary gear 5, and a concave insertion part 77 is formed adjacent to the dog 72 in the gear rotation direction. Note that a convex and a concave formed by the convex dog 72 and the concave insertion part 77, respectively, have relative relationship, and specifically, a part without the convex dog 72 is referred to as the concave insertion part 77, and a part without the concave insertion part 77 is referred to as the convex dog 72. Similarly, a dog 52 is formed on a lateral surface of the first stationary gear 5 that faces the movable gear 7, projecting toward the movable gear 7, and a concave insertion part 57 is formed adjacent to the dog 52 in the gear rotation direction. When the dog 72 of the movable gear 7 is inserted into the insertion part 57 of the first stationary gear 5 and the dog 52 of the first stationary gear 5 is inserted into the insertion part 77 of the movable gear 7, the dog 72 of the movable gear 7 is engaged with the dog 52 of the first stationary gear 5. With the above, a torque from one of the movable gear 7 and the first stationary gear 5 is transmitted to the other via the dogs 72, 52.

A dog 74 is formed on a lateral surface of the movable gear 7 that faces the second stationary gear 6, projecting toward the second stationary gear 6, and a concave insertion part 79 is formed adjacent to the dog 74 in the gear rotation direction. Note that a convex and a concave formed by the convex dog 74 and the concave insertion part 79, respectively, have relative relationship, and specifically, a part without the convex dog 74 is referred to as the concave insertion part 79, and a part without the concave insertion part 79 is referred to as the convex dog 74. Similarly, a dog 64 is formed on a lateral surface of the second stationary gear 6 that faces the movable gear 7, projecting toward the movable gear 7, and a concave insertion part 69 is formed adjacent to the dog 64 in the gear rotation direction. When the dog 74 of the movable gear 7 is inserted into the insertion part 69 of the second stationary gear 6 and the dog 64 of the second stationary gear 6 is inserted into the insertion part 79 of the movable gear 7, the dog 74 of the movable gear 7 is engaged with the dog 64 of the second stationary gear 6. With the above, a torque from one of the movable gear 7 and the second stationary gear 6 is transmitted to the other via the dogs 74, 64.

At the dog disengaged stage shown in Fig. 3A, the engagement between the dog 72 of the movable gear 7 and the dog 52 of the first stationary gear 5 is released. Specifically, when a drive force of the shift actuator 38 is transmitted from the shift cam 33 to the movable gear 7, and the movable gear 7 thus starts moving toward the second stationary gear 6, the dog 72 of the movable gear 7 comes off the insertion part 57 of the first stationary gear 5, and the dog 52 of the first stationary gear 5 comes off the insertion part 77 of the movable gear 7. In the above, as the dog 72 of the movable gear 7 and the dog 52 of the first stationary gear 5 are forced to contact each other by high pressure, separation of the movable gear 7 from the stationary gear 5 requires an increased output from the shift actuator 38 to apply a stronger force to the movable gear 7.

At the dog bumping stage shown in Fig. 3B, the dog 74 of the movable gear 7 bumps into the dog 64 of the second stationary gear 6. That is, at the dog bumping stage, the dog 74 of the movable gear 7 bumps into a part other than the insertion part 69 on the second stationary gear 6. In the above, when the moving speed of the movable gear 7 is high, the relative rotation speed of the movable gear 7 and the second stationary gear 6 drops due to the bump between the dog 74 of the movable gear 7 and the dog 64 of the second stationary gear 6. This may cause delay in shifting to the dog engaged stage. Therefore, preferably, the moving speed of the movable gear 7 is decreased to modify the impact in bumping into the second stationary gear 6.

However, when a strong force is applied to the movable gear 7 to release the engagement between the movable gear 7 and the first stationary gear 5 at the dog disengaged stage, the movable gear 7 is pushed at a high speed by the force at the moment when the engagement is released, and consequently highly likely fiercely bumps into the second stationary gear 6. If this occurs, remarkable delay in shifting to the dog engaged stage is resulted.

At the dog engaged stage shown in Fig. 3C, the dog 74 of the movable gear 7 is engaged with the dog 64 of the second stationary gear 6. That is, the dog 74 of the movable gear 7 is inserted into the insertion part 69 of the second stationary gear 6, and the dog 64 of the second stationary gear 6 is inserted into the insertion part 79 of the movable gear 7, so that the dog 74 of the movable gear 7 and the dog 64 of the second stationary gear 6 are brought to contact each other in the gear rotation direction. In the above, preferably, a pushing force is applied to the movable gear 7 to assist insertion of the dogs 74, 64 in order to accelerate completion of engagement.

Note that the dog disengaged stage may directly shift to the dog engaged stage without intervention of the dog bumping stage. This occurs when the dog 74 of the movable gear 7 is inserted directly into the insertion part 69 without bumping into the dog 64 of the second stationary gear 6.

The above described description on Figs. 3A to 3C is applicable also to a case according to the second shifting aspect in which a movable gear engaged with a pre-shifting stationary gear differs from a movable gear engaged with a post-shifting stationary gear. That is, when a strong torque is applied to the shift cam 33 (see Fig. 2) in order to release engagement between the pre-shifting stationary gear and the first movable gear at the dog disengaged stage, the shift cam 33 abruptly starts rotating at the moment when the engagement is released. In the above, the moving speeds of not only the first movable gear but also all movable gears connected to the shift cam 33 increase, and consequently, the second movable gear fiercely bumps into the post-shifting stationary gear. Therefore, the following description on control will be similarly applied to the second shifting aspect.

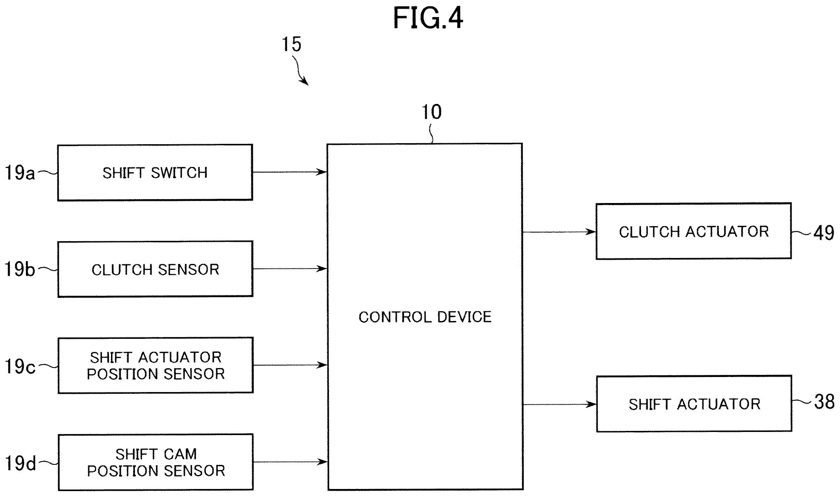

Fig. 4 is a block diagram explaining an example structure of the transmission apparatus 15. The transmission apparatus 15 comprises a shift switch 19a, a clutch sensor 19b, a shift actuator position sensor 19c, and a shift cam position sensor 19d. These sensors are connected to the control device 10.

The shift switch 19a is a switch operated by a passenger, and outputs a shift instruction (a shift up instruction to advance the shift step or a shift down instruction to reverse the shift step) to the control device 10. The shift switch 19a includes a shift up switch and a shift down switch.

The clutch sensor 19b comprises, e.g., a potentiometer for outputting a signal according to the position of a pressure plate (not shown) included in the clutch 40. The control device 10 can determine a state (fully engaged state, half-engaged state, release state) of the clutch 40, based on the signal output from the clutch sensor 19b.

The shift actuator position sensor 19c comprises, e.g., a potentiometer for outputting a voltage signal according to the rotation angle of the shift actuator 38. The control device 10 can determine the current position and moving speed of the movable gear 7 and the current shift step, based on the signal output from the shift actuator position sensor 19c.

The shift cam position sensor 19d comprises, e.g., a potentiometer for outputting a voltage signal according to the rotation angle of the shift cam 33. The control device 10 can determine the current position and moving speed of the movable gear 7 and the current shift step, based on the signal output from the shift cam position sensor 19d.

The control device 10 comprises a CPU (Central Processing Unit) and a memory such as a ROM (Read Only Memory) and a RAM (Random Access Memory).

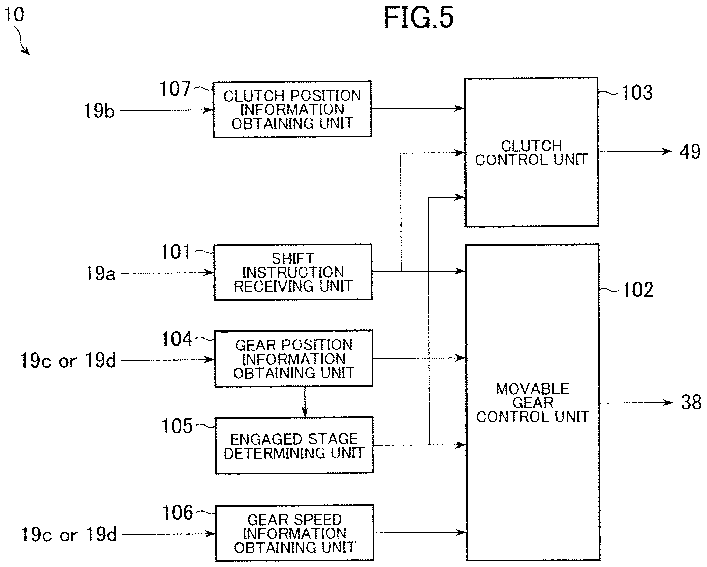

Fig. 5 is a block diagram showing an example functional structure of the control device 10. The control device 10 comprises a shift instruction receiving unit 101, a movable gear control unit 102, a clutch control unit 103, a gear position information obtaining unit 104, an engaged stage determining unit 105, a gear speed information obtaining unit 106, a clutch position information obtaining unit 107, and a gear target speed calculation unit 109. The respective units included in the control device 10 are realized by executing a program stored in the memory by the CPU of the control device 10.

The shift instruction receiving unit 101 receives a shift instruction output from the shift switch 19a, and outputs the received shift instruction to the movable gear control unit 102 and the clutch control unit 103.

Upon receipt of the shift instruction from the shift instruction receiving unit 101, the movable gear control unit 102 drives the shift actuator 38 so as to switch the shift step set by the transmission mechanism 30 to a step according to the shift instruction. Specifically, the movable gear control unit 102 includes a pulse width modulator for converting an input signal into a pulse width modulation (Pulse Width Modulation: PWM) signal, and applies PWM control to the shift actuator 38. The pulse width modulator generates a PWM signal having a duty ratio corresponding to an output target value of the shift actuator 38. Alternatively, not being limited to the above, the movable gear control unit 102 may supply a voltage corresponding to the output target value to the shift actuator 38.

Upon receipt of the shift instruction from the shift instruction receiving unit 101, the clutch control unit 103 drives the clutch actuator 49 to leave the clutch 40 in a release state so that the transmission mechanism 30 can set a clutch step. The clutch control unit 103 as well applies PWM control to the clutch actuator 49.

The gear position information obtaining unit 104 obtains position information on the movable gear 7, based on an output signal from the shift cam position sensor 19d, and outputs the obtained position information to the movable gear control unit 102 and the engaged stage determining unit 105. Alternatively, not being limited to the above, the gear position information obtaining unit 104 may obtain position information on the movable gear 7, based on the output signal from the shift actuator position sensor 19c.

The engaged stage determining unit 105 determines, based on the position information on the movable gear 7, at which of the dog disengaged stage, the dog bumping stage, and the dog engaged stage the movable gear 7 currently is. At which step the movable gear 7 currently is is determined based on, e.g., a relationship between the respective thresholds corresponding to the dog disengaged stage, the dog bumping stage, and the dog engaged stage, and a signal value of the shift actuator position sensor 19c or the shift cam position sensor 19d.

The gear speed information obtaining unit 106 obtains speed information on the movable gear 7, based on the output signal from the shift cam position sensor 19d, and outputs the obtained speed information to the movable gear control unit 102. Alternatively, not being limited to the above, the gear speed information obtaining unit 106 may obtain speed information on the movable gear 7, based on the output signal from the shift actuator position sensor 19c.

The clutch position information obtaining unit 107 obtains information indicating the state (a fully engaged state, a half-engaged state, a release state) of the clutch 40, based on the output signal from the clutch sensor 19b, and outputs the obtained information to the clutch control unit 103.

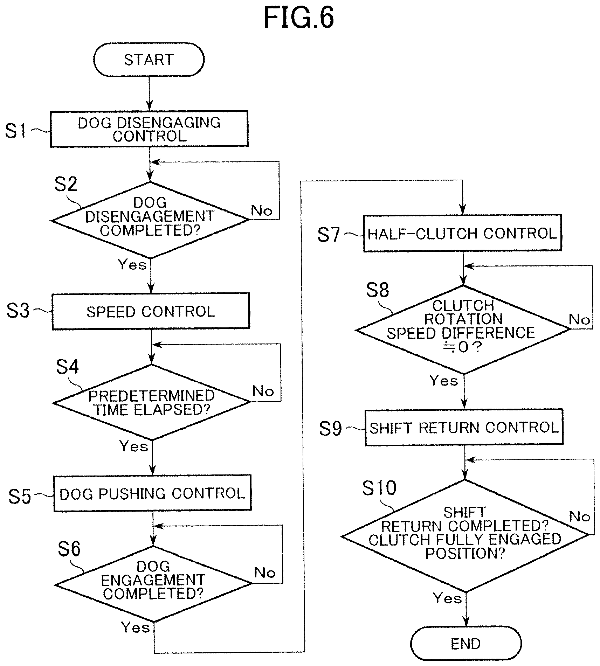

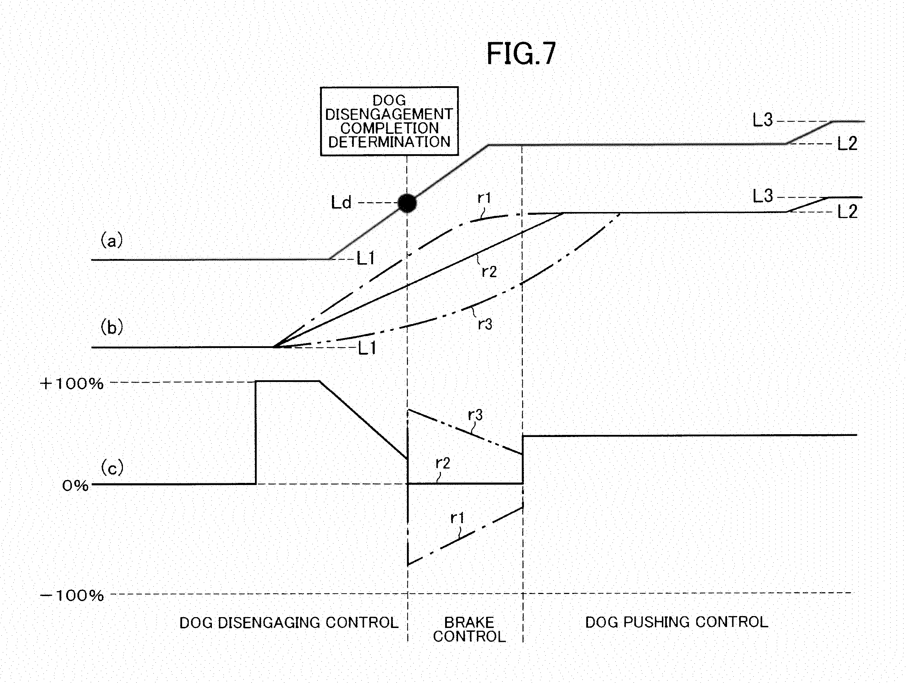

Fig. 6 is a flowchart of an example operation of the control device 10. Fig. 7 is a timing chart of an example operation of the control device 10. Specifically, Fig. 7 shows a part corresponding to the process at S1 to S6 shown in Fig. 6.

In Fig. 7, the upper line (a) relates to a rotation angle of the shift cam 33. The middle line (b) relates to a rotation angle of the shift actuator 38. As to the lines (a) and (b), the abscissa indicates time, while the ordinate indicates a rotation angle. The respective rotation angles of the shift cam 33 and the shift actuator 38 change from the position L1 (see Fig. 3A) at the dog disengaged stage via the position L2 (see Fig. 3B) at the dog bumping stage to the position L3 (see Fig. 3B) at the dog engaged stage. As the shift cam 33 and the shift actuator 38 are connected to each other via a rigid shift rod 37, change profiles of the rotation angles are similar to each other, though times for change of the rotation angles do not fully coincide with each other. In Fig. 7, the lower line (c) indicates a duty ratio of a PWM signal to be given to the shift actuator 38. As to the line (c), the abscissa indicates time, while the ordinate indicates a duty ratio. The duty ratio varies between -100% and +100%.

Initially, the movable gear control unit 102 begins dog disengaging control (S1). In the dog disengaging control, the movable gear control unit 102 outputs a positive voltage to the shift actuator 38. A positive voltage here refers to a voltage for applying a force toward the second stationary gear 6 to the movable gear 7. Specifically, in the dog disengaging control, the movable gear control unit 102 outputs a PWM signal having a duty ratio according to the difference between a target position and the current position of the movable gear 7, the target position being the position L2 at the dog bumping stage. Therefore, a positive PWM signal having the maximum duty ratio (e.g., 100%) is output at the initial stage in the dog disengaging control. Thereafter, with the engagement between the dogs 72, 52 of the movable gear 7 and of the first stationary gear 5 released, the duty ratio of the PWM signal begins decreasing as the movable gear 7 approaches the second stationary gear 6. With the above, it is possible to reduce the moving speed of the movable gear 7 after release of the engagement, while ensuring a force to release the engagement between the dogs 72, 52. Note that, not being limited to the above described aspect, a PWM signal may always have the maximum duty ratio during a period with the dog disengaging control, or alternatively, the maximum duty ratio may gradually decrease after elapse of a predetermined period of time.

The engaged stage determining unit 105 monitors completion of the dog disengaged stage (S2), and upon determination of completion of the dog disengaged stage (S2: YES), notifies the movable gear control unit 102 of the completion. For example, the engaged stage determining unit 105 may determine completion of the dog disengaged stage when the shift actuator 38 reaches a predetermined dog disengagement determination position Ld.

Note that, not being limited to the above described aspect, the engaged stage determining unit 105 may measure a period of time elapsed after the start of a shift operation, and determine completion of the dog disengaged stage when a predetermined dog disengagement determination period of time elapses after the start of the shift operation. A period of time having elapsed after the start of a shift operation corresponds to a period of time with a force toward the second stationary gear 6 kept applied to the movable gear 7.

Upon receipt of the notice of completion of the dog disengaged stage from the engaged stage determining unit 105, the movable gear control unit 102 carries out speed control (S3). In the speed control, the movable gear control unit 102 controls the shift actuator 38 such that the moving speed of the movable gear 7 moving toward the second stationary gear 6 becomes closer to a target speed. In Fig. 7, a case r1 with the moving speed of the movable gear 7 being larger than the target speed is indicated by an alternate long and short dash line, a case r2 with the moving speed of the movable gear 7 being the same as the target speed is indicated by a solid line, and a case r3 with the moving speed of the movable gear 7 being smaller than the target speed is indicated by a long dashed double-short dashed line.

For example, in the case r1 with the moving speed of the movable gear 7 being larger than the target speed, a negative voltage is output to the shift actuator 38. A negative voltage here is a voltage for applying a force directed opposite from the direction toward the second stationary gear 6 (hereinafter referred to as a brake force) to the movable gear 7. That is, by applying a brake force to the movable gear 7 in the case r1 with the moving speed of the movable gear 7 being larger, it is possible to reduce the moving speed of the movable gear 7 before the movable gear 7 reaches the position L2 at the dog bumping stage, to thereby modify the impact in bumping between the dog 74 of the movable gear 7 and the dog 64 of the second stationary gear 6.

Further, in the case r3 with the moving speed of the movable gear 7 being smaller than the target speed, a positive voltage is output to the shift actuator 38. A positive voltage here refers to a voltage for applying a force toward the second stationary gear 6 (hereinafter refers to as an assist force) to the movable gear 7. By applying an assist force to the movable gear 7 in the case r3 with the moving speed of the movable gear 7 being smaller, it is possible to increase the moving speed of the movable gear 7 so that the movable gear 7 can reach faster the position L2 at the dog engaged stage.

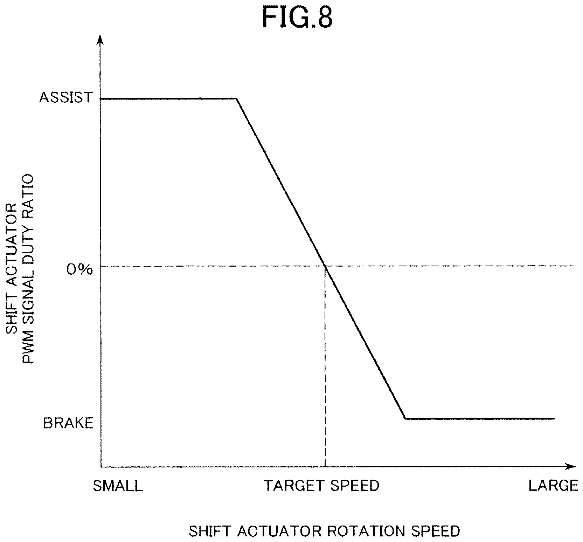

Fig. 8 is a diagram showing a relationship between the rotation speed of the shift actuator 38 and the duty ratio of a PWM signal to be given to the shift actuator 38. As shown, in an area relatively close to the target speed, the larger the moving speed of the movable gear 7 is than the target speed, the larger the duty ratio of a negative PWM signal becomes, and the smaller the moving speed of the movable gear 7 than the target speed is, the larger the duty ratio of a positive PWM signal becomes. With the above, it is possible to make uniform the impact in bumping between the dog 74 of the movable gear 7 and the dog 64 of the second stationary gear 6. Meanwhile, in an area relative far from the target speed, the duty ratio is constant. Note that the relationship between the rotation speed of the shift actuator 38 and the duty ratio of the PWM signal to be given to the shift actuator 38 is not limited to that which is shown in Fig. 8. For example, as the difference between the moving speed of the movable gear 7 and the target speed becomes larger, the duty ratio of the PWM signal may be changed stepwise, exponential function-wise, or logarithmic function-wise.

After elapse of a predetermined period of time after the start of the speed control (S4: YES), the movable gear control unit 102 ends the speed control (S5). Alternatively, not being limited to the above, the speed control may be ended when the shift actuator 38 reaches a predetermined dog disengagement determination position Ld.

Thereafter, the movable gear control unit 102 begins dog pushing control (S5). In the dog pushing control, the movable gear control unit 102 outputs a positive voltage to the shift actuator 38 to accelerate shifting to the dog engaged stage. Specifically, the movable gear control unit 102 outputs a positive PWM signal having a duty ratio smaller than the maximum value. With the above, a pushing force toward the second stationary gear 6 is applied to the movable gear 7, whereby insertion of the dog 74 of the movable gear 7 into the insertion part 69 of the second stationary gear 6 is accelerated.

The engaged stage determining unit 105 monitors completion of the dog engaged stage (S6), and upon determination of completion of the dog engaged stage (S6: YES), notifies the clutch control unit 103 of the completion. For example, the engaged stage determining unit 105 may determine completion of the dog engaged stage when the shift actuator 38 reaches the predetermined position L3 at the dog engaged stage.

Upon receipt of the notice of completion of the dog engaged stage from the engaged stage determining unit 105, the clutch control unit 103 carries out a half-clutch control to reduce shock in shifting (S7). That is, the clutch control unit 103 keeps outputting a signal for leaving the clutch 40 in a half-clutch state to the clutch actuator 49.

After the half-clutch control begins and the rotation speed difference of the clutch 40 becomes closer to 0 (S8: YES), the movable gear control unit 102 begins shift return control to return the rotation angle of the shift actuator 38 to the original position. In addition, the clutch control unit 103 leaves the clutch 40 in a fully engaged state. After the shift return control ends and the clutch 40 comes to be in the fully engaged state (S10: YES), the shifting ends.

In the above described embodiment, in the dog disengaging control, the movable gear control unit 102 applies a force toward the second stationary gear 6 to the movable gear 7, and after the engagement between the dogs 52, 72 of the first stationary gear 5 and of the movable gear 7 is released, carries out the speed control. This makes it possible to set a desired force to be applied to the movable gear 7 in the dog disengaging control to release the engagement.

In the above described embodiment, the position information obtaining unit 104 obtains position information specifying the position of the movable gear 7, and the engaged stage determining unit 105 determines, based on the position information, whether or not the engagement between the dogs 52, 72 of the first stationary gear 5 and of the movable gear 7 is released. Then, upon determination that the engagement between the dogs 52, 72 of the first stationary gear 5 and of the movable gear 7 is released, the movable gear control unit 102 carries out the speed control. This makes it easier to set a time for switching to the speed control to a time before the dogs 74, 64 of the movable gear 7 and of the second stationary gear 6 contact each other.

According to the above described embodiment, the position information obtaining unit 104 obtains information on the rotation angle of the shift actuator 38 as the position information. This makes it possible to obtain position information on the movable gear 7 without providing a structure for directly determining the position of the movable gear 7.

Further, in the above described embodiment, the position information obtaining unit 104 obtains information on the rotation angle of the shift cam 33 as the position information. This makes it possible to obtain position information on the movable gear 7 without providing a structure for directly determining the position of the movable gear 7.

Further, in the above described embodiment, after elapse of a predetermined period of time after the movable gear 7 starts moving toward the second speed, the movable gear control unit 102 carries out the speed control. This makes it possible to carry out the speed control before the dogs 74, 64 of the movable gear 7 and second stationary gear 6 contact each other, without using the position information on the movable gear 7.

In the above described embodiment, the movable gear control unit 102 decreases the force to be applied to the movable gear 7 in the dog pushing control so as to be smaller than the force to be applied to the movable gear 7 in the dog disengaging control. With this arrangement, the dog 74 of the movable gear 7 can be prevented from fiercely bumping into a deep part of the insertion portion 69 of the second stationary gear 6. Further, the dog 64 of the second stationary gear 6 can be also prevented from bumping into a deep part of the insertion portion 79 of the movable gear 7.

In the above described embodiment, the movable gear control unit 102 ends the speed control after the movable gear 7 reaches a predetermined position, such as a dog disengagement determination position Ld or the like. This allows prompt shifting to the dog pushing control.

In the above described embodiment, the movable gear control unit 102 may end the speed control after elapse of a predetermined period of time after the start of the speed control. This makes it possible to promptly shift to the dog pushing control without providing a structure for directly detecting the position of the movable gear 7.

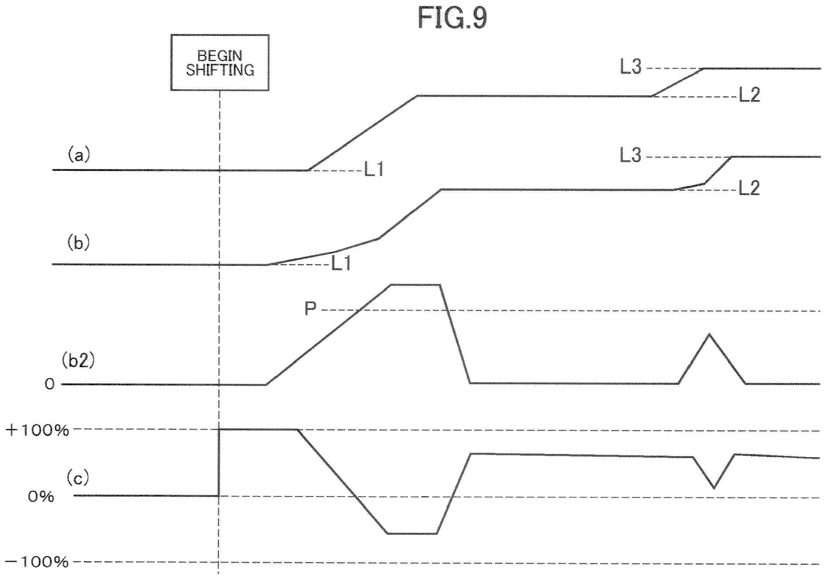

Fig. 9 a timing chart showing an example operation of a first modified example. In the following, a point identical to that in the above described example operation will not be described in detail. In Fig. 9, the line (b2) relates to a rotation speed of the shift actuator 38.

In this example, the movable gear control unit 102 carries out the speed control after receipt of a shift instruction, until completion of the dog engaged stage. In the speed control, the movable gear control unit 102 sets the duty ratio of the positive PWM signal to be output to the shift actuator 38 such that the smaller the rotation speed of the shift actuator 38 than the target speed P is, the rotation speed indicting the moving speed of the movable gear 7, the larger the duty ratio becomes. Further, the larger the rotation speed of the shift actuator 38 than the target speed P is, the larger the duty ratio of the negative PWM signal to be output to the shift actuator 38 is.

At the beginning of the dog disengaged stage, as the rotation speed of the shift actuator 38 is 0, the movable gear control unit 102 outputs the positive PWM signal having the maximum duty ratio (100%) to the shift actuator 38. With the dog disengaged stage completed, the movable gear 7 moves toward the second stationary gear 6, and the rotation speed of the shift actuator 38 increases. Therefore, the movable gear control unit 102 reduces the duty ratio of the positive PWM signal to be output to the shift actuator 38. With the above, a force toward the second stationary gear 6 that is to be applied to the movable gear 7 decreases.

When the rotation speed of the shift actuator 38 exceeds the target speed P, the movable gear control unit 102 outputs the negative PWM signal to the shift actuator 38 to thereby apply a brake force to the movable gear 7. With the above, it is possible to reduce the moving speed of the movable gear 7 before the movable gear 7 reaches the position L2 at the dog bumping stage to thereby modify the impact in bumping between the dog 74 of the movable gear 7 and the dog 64 of the second stationary gear 6.

Meanwhile, when the rotation speed of the shift actuator 38 does not exceed the target speed P, the movable gear control unit 102 keeps outputting the positive PWM signal to the shift actuator 38 to thereby apply an assist force to the movable gear 7. With the above, it is possible to increase the moving speed of the movable gear 7 so that the movable gear 7 can reach faster the position L2 at the dog bumping state.

Thereafter, when the movable gear 7 reaches the position L2 at the dog bumping stage and the dog 74 of the movable gear 7 bumps into the dog 64 of the second stationary gear 6, the rotation speed of the shift actuator 38 becomes 0. Accordingly, the movable gear control unit 102 outputs the positive PWM signal to the shift actuator 38. With the above, a force toward the second stationary gear 6 is applied to the movable gear 7, whereby insertion of the dog 74 of the movable gear 7 into the insertion part 69 of the second stationary gear 6 is accelerated. In the above, preferably, the duty ratio of the PWM signal is smaller than the maximum value (100%).

Thereafter, when the dog 74 of the movable gear 7 is inserted into the insertion part 69 of the second stationary gear 6 at the dog engaged stage, the rotation speed of the shift actuator 38 temporarily increases. In the above, along with a temporal increase of the rotation speed of the shift actuator 38, the movable gear control unit 102 temporarily decreases the duty ratio of the PWM signal to be output to the shift actuator 38. With the above, the impact when the dog 74 of the movable gear 7 is inserted into the insertion part 69 of the second stationary gear 6 can be modified.

In the above described first modified example, the movable gear control unit 102 carries out the speed control after the start of shift operation, until the dog 74 of the movable gear 7 is engaged with the dog 64 of the second stationary gear 6. With the above, it is possible to increase a force to be applied to the movable gear 7 to release the engagement at the dog disengaged stage and to apply a force toward the second stationary gear 6 to the movable gear 7 after the dog bumping stage even without switching the control to be carried out by the time of completion of the engagement.

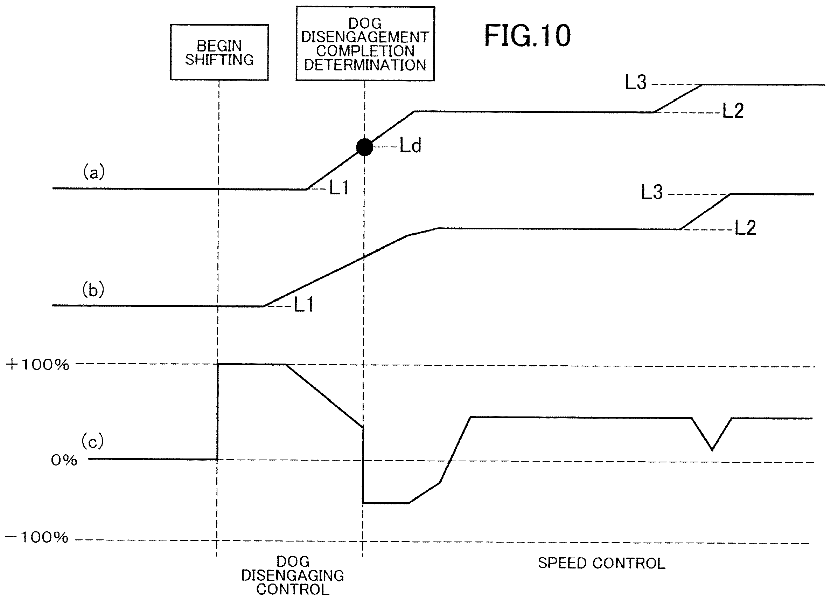

Although embodiments of the present invention have been described above, the present invention is not limited to the above described embodiments, and various modified embodiments are possible for a person skilled in the art. For example, as shown in the second modified example shown in Fig. 10, the speed control may be carried out after determination of completion of the dog disengaged stage, until completion of the dog engaged stage. 1 two-wheeled motor vehicle, 2 front wheel, 3 rear wheel, 4 front fork, 81 steering shaft, 83 steering, 9 seat, 10 control device, 11 engine unit, 15 transmission apparatus, 19a shift switch, 19b clutch sensor, 19c shift actuator position sensor, 19d shift cam position sensor, 1i to 6i, 1h to 6h, 34i gear (34i, 5h, 6h movable gear), 21a primary gear, 30 transmission mechanism, 31 input shaft, 32 output shaft, 33 shift cam, 33d cam slot, 35 engagement slot, 36 shift fork, 37 shift rod, 38 shift actuator, 39 dog , 40 clutch, 41a primary gear, 41 driving member, 42 following member, 49 clutch actuator, 5 first stationary gear, 52 dog, 57 insertion part, 6 second stationary gear, 64 dog, 69 insertion part, 7 movable gear, 72 dog, 74 dog, 77 insertion part, 79 insertion part, 101 shift instruction receiving unit, 102 movable gear control unit, 103 clutch control unit, 104 gear position information obtaining unit, 105 engaged stage determining unit, 106 gear speed information obtaining unit, 107 clutch position information obtaining unit.

## Claims

1. A transmission (15), comprising:
a dog clutch transmission mechanism (30) including
a first stationary gear (5) capable of relative rotation relative to a shaft and incapable of movement in a shaft direction,
a second stationary gear (6) capable of relative rotation relative to the shaft and incapable of movement in the shaft direction, and
a movable gear (7) provided on the shaft between the first stationary gear (5) and the second stationary gear (6), and incapable of relative rotation relative to the shaft and capable of movement in the shaft direction, in which
a dog (72) for being engaged with a dog (52) formed on a lateral surface of the first stationary gear (5) to transmit rotation of the shaft to the first stationary gear (5) is formed on one lateral surface of the movable gear (7),
a dog (74) for being engaged with a dog (64) formed on a lateral surface of the second stationary gear (6) to transmit the rotation of the shaft to the second stationary gear (6) is formed on another lateral surface of the movable gear (7), and
when the movable gear (7) moves from a state in which the dog (72) thereof is engaged with the dog (52) of the first stationary gear (5) toward the second stationary gear (6), engagement between the dog (52) of the first stationary gear (5) and the dog (72) of the movable gear (7) is released and thereafter the dog (74) of the movable gear (7) is engaged with the dog (64) of the second stationary gear (6);
an actuator (38) for moving the movable gear (7) in the shaft direction; and **characterised by** comprising:
a control device for driving the actuator (38), and while obtaining speed information indicating a moving speed of the movable gear (7), for carrying out speed control so as to apply a force toward the first stationary gear (5) to the movable gear (7) when the moving speed of the movable gear (7) moving toward the second stationary gear (6) is larger than a predetermined value, and a force toward the second stationary gear (6) to the movable gear (7) when the moving speed of the movable gear (7) moving toward the second stationary gear (6) is smaller than the predetermined value, and
wherein the control device applies the force toward the second stationary gear (6) to the movable gear (7), from a state in which the dog (52) of the first stationary gear (5) engaged with the dog (72) of the movable gear (7), and
carries out the speed control after engagement between the dog (52) of the first stationary gear (5) and the dog (72) of the movable gear (7) is released, and
wherein the control device obtains position information indicating a position of the movable gear (7),
determines, based on the position information, whether or not the engagement between the dog (52) of the first stationary gear (5) and the dog (72) of the movable gear (7) is released, and
carries out the speed control upon determination that the engagement between the dog (52) of the first stationary gear (5) and the dog (72) of the movable gear (7) is released.

2. The transmission (15) according to claim 1, wherein
the transmission (15) mechanism further includes a shift cam (33) for converting rotation of the actuator (38) into movement of the movable gear (7), and
the control device obtains information indicating a rotation angle of the shift cam (33) as the position information.

3. The transmission (15) according to claim 1, wherein the control device carries out the speed control after receipt of a shift instruction until the dog (74) of the movable gear (7) is engaged with the dog (64) of the second stationary gear (6).

4. The transmission (15) according to claim 1, wherein the control device decreases a force to be applied to the movable gear (7) after the gear of the movable gear (7) contacts the dog (64) of the second stationary gear (6) so as to be smaller than a force to be applied to the movable gear (7) before engagement between the dog (52) of the first stationary gear (5) and the dog (72) of the movable gear (7) is released.

5. The transmission (15) according to claim 1, wherein the speed control unit ends the speed control after the movable gear (7) reaches a predetermined position, and/or after elapse of a predetermined period of time after start of the speed control.

6. A transmission (15), comprising:
a dog clutch transmission mechanism (30), including
a first stationary gear (1h) capable of relative rotation relative to a shaft and incapable of movement in the shaft direction,
a first movable gear (5h) provided to the shaft where the first stationary gear (1h) is provided, and incapable of relative rotation relative to the shaft and capable of movement in the shaft direction,
a second stationary gear (2h) capable of relative rotation relative to the shaft where the first stationary gear (1h) is provided or a different shaft and incapable of movement in a shaft direction,
a second movable gear (6h) provided to the shaft where the second stationary gear (2h) is provided, and incapable of relative rotation relative to the shaft and capable of movement in the shaft direction, and
a shift cam (33) for moving the first movable gear (5h) and the second movable gear (6h) in the shaft direction, in which
a dog (39) for being engaged with a dog (39) formed on a lateral surface of the first stationary gear (1h) to transmit rotation of the shaft where the first stationary gear (1h) is provided to the first stationary gear (1h) is formed on a lateral surface of the first movable gear (5h) that is opposed to the first stationary gear (1h),
a dog (39) for being engaged with a dog (39) formed on a lateral surface of the second stationary gear (2h) to transmit rotation of the shaft where the second stationary gear (2h) is provided to the second stationary gear (2h) is formed on a lateral surface of the second movable gear (6h) that is opposed to the second stationary gear (2h), and
when the second movable gear (6h) moves toward the second stationary gear (2h) from a state in which the dog (39) of the first stationary gear (1h) engaged with the dog (39) of the first movable gear (5h), engagement between the dog (39) of the first stationary gear (1h) and the dog (39) of the first movable gear (5h) is released and thereafter the dog (39) of the second movable gear (6h) is engaged with the dog (39) of the second stationary gear (2h);
an actuator (38) for driving the shift cam (33); and **characterised by** comprising:
a control device for driving the actuator (38), and while obtaining speed information indicating a moving speed of the second movable gear (6h), for carrying out speed control so as to apply a force toward the second stationary gear (2h) to the second movable gear (6h) when the moving speed of the second movable gear (6h) moving toward the second stationary gear (2h) is smaller than a predetermined value, and a force departing from the second stationary gear (2h) to the second movable gear (6h) when the moving speed of the second movable gear (6h) moving toward the second stationary gear (2h) is larger than the predetermined value, and
wherein the control device applies a force departing from the first stationary gear (1h) to the first movable gear (5h), from a state_in which the dog (39) of the first stationary gear (1h) engaged with the dog (39) of the first movable gear (5h), and
carries out the speed control after the engagement between the dog (39) of the first stationary gear (1h) and the dog (399 of the first movable gear (5h) is released, and
wherein the control device obtains position information indicating positions of the first movable gear (5h) and the second movable gear (6h),
determines, based on the position information, whether or not the engagement between the dog (39) of the first stationary gear (1h) and the dog (39) of the first movable gear (5h) is released, and
carries out the speed control upon determination that the engagement between the dog (39) of the first stationary gear (1h) and the dog (39) of the first movable gear (5h) is released.

7. The transmission (15) according to claim 1 or 6, wherein the control device obtains information indicating a rotation angle of the actuator (38) as the position information.

8. The transmission (15) according to claim 6, wherein the control device obtains information indicating a rotation angle of the shift cam (33) as the position information.

9. The transmission (15) according to claim 6, wherein the control device carries out the speed control after receipt of a shift instruction until the dog (39) of the second movable gear (5h) is engaged with the dog (39) of the second stationary gear (2h).

10. The transmission (15) according to claim 6, wherein the control device decreases a force to be applied to the second movable gear (6h) after the dog (39) of the second movable gear (6h) contacts the dog (39) of the second stationary gear (2h) so as to be smaller than a force to be applied to the first movable gear (5h) before engagement between the dog (39) of the first stationary gear (1h) and the dog (39) of the first movable gear (5h) is released.

11. The transmission (15) according to claim 6, wherein the speed control unit ends the speed control after the second movable gear (6h) reaches a predetermined position, and/or after elapse of a predetermined period of time after start of the speed control.

12. A saddle-riding type vehicle (1) comprising a transmission (15) according to anyone of the previous claims.

## Patentansprüche

1. Getriebe (15), das beinhaltet:
einen Klauenkupplungs-Übersetzungsmechanismus (30), umfassend
ein erstes stationäres Zahnrad (5), das zu einer Relativdrehung relativ zu einer Welle in der Lage und in einer Wellenrichtung unbeweglich ist,
ein zweites stationäres Zahnrad (6), das zu einer Relativdrehung relativ zu der Welle in der Lage und in der Wellenrichtung unbeweglich ist, und
ein bewegliches Zahnrad (7), das auf der Welle zwischen dem ersten stationären Zahnrad (5) und dem zweiten stationären Zahnrad (6) vorgesehen ist und zu einer Relativdrehung relativ zu der Welle nicht in der Lage und zu einer Bewegung in der Wellenrichtung in der Lage ist, wobei
eine Klaue (72) für den Eingriff mit einem an einer Seitenfläche des ersten stationären Zahnrades (5) ausgebildeten Klaue (52) zur Übertragung der Drehung der Welle auf das erste stationäre Zahnrad (5) an einer Seitenfläche des beweglichen Zahnrades (7) ausgebildet ist,
eine Klaue (74) für den Eingriff mit einem an einer Seitenfläche des zweiten stationären Zahnrades (6) ausgebildeten Klaue (64) zur Übertragung der Drehung der Welle auf das zweite stationäre Zahnrad (6) an einer anderen Seitenfläche des beweglichen Zahnrades (7) ausgebildet ist und,
wenn sich das bewegliche Zahnrad (7) aus einem Zustand, in dem die Klaue (72) mit der Klaue (52) des ersten stationären Zahnrades (5) in Eingriff steht, in Richtung des zweiten stationären Zahnrades (6) bewegt, der Eingriff zwischen der Klaue (52) des ersten stationären Zahnrades (5) und der Klaue (72) des beweglichen Zahnrades (7) freigegeben wird und anschließend die Klaue (74) des beweglichen Zahnrades (7) mit der Klaue (64) des zweiten stationären Zahnrades (6) in Eingriff gebracht wird;
ein Stellglied (38) zum Bewegen des beweglichen Zahnrades (7) in der Wellenrichtung; und
**dadurch gekennzeichnet, dass** er umfasst:
eine Steuervorrichtung zum Antreiben des Stellgliedes (38) und, unter Beziehen von Geschwindigkeitsinformationen, die eine Bewegungsgeschwindigkeit des beweglichen Zahnrades (7) kennzeichnen, Ausführen einer Geschwindigkeitssteuerung, um so eine Kraft in Richtung des ersten stationären Zahnrades (5) auf das bewegliche Zahnrad (7) auszuüben, wenn sich die Bewegungsgeschwindigkeit des beweglichen Zahnrads (7), das sich in Richtung des zweiten stationären Zahnrades (6) bewegt, größer ist als ein vorbestimmter Wert und eine Kraft in Richtung des zweiten stationären Zahnrades (6) zu dem beweglichen Zahnrad (7), wenn die Bewegungsgeschwindigkeit des beweglichen Zahnrads (7), das sich in Richtung des zweiten stationären Zahnrades bewegt (6), kleiner ist als der vorbestimmte Wert, und
die Steuervorrichtung die Kraft in Richtung des zweiten stationären Zahnrades (6) auf das bewegliche Zahnrad (7) aus einem Zustand ausübt, in dem die Klaue (52) des ersten stationären Zahnrades (5) mit der Klaue (72) des beweglichen Zahnrades (7) in Eingriff steht, und
die Geschwindigkeitssteuerung ausführt, nachdem der Eingriff zwischen der Klaue (52) des ersten stationären Zahnrades (5) und der Klaue (72) des beweglichen Zahnrades (7) gelöst ist, und
die Steuervorrichtung Positionsinformationen bezieht, die eine Position des beweglichen Zahnrads (7) angeben,
auf der Grundlage der Positionsinformationen bestimmt, ob der Eingriff zwischen der Klaue (52) des ersten stationären Zahnrades (5) und der Klaue (72) des beweglichen Zahnrades (7) freigegeben ist, und
die Geschwindigkeitssteuerung bei der Bestimmung ausführt, dass der Eingriff zwischen der Klaue (52) des ersten stationären Zahnrades (5) und der Klaue (72) des beweglichen Zahnrades (7) freigegeben ist.

2. Getriebe (15) nach Anspruch 1, bei dem
der Mechanismus des Getriebes (15) weiterhin eine Schaltnocke (33) zum Umwandeln der Drehung des Stellglieds (38) in eine Bewegung des beweglichen Zahnrads (7) umfasst und
die Steuervorrichtung Informationen, die einen Drehwinkel der Schaltnocke (33) kennzeichnen, als die Positionsinformationen bezieht.

3. Getriebe (15) nach Anspruch 1, bei dem die Steuervorrichtung die Geschwindigkeitssteuerung nach dem Empfang eines Schaltbefehls ausführt, bis die Klaue (74) des beweglichen Zahnrades (7) mit der Klaue (64) des zweiten stationären Zahnrades (6) in Eingriff steht.

4. Getriebe (15) nach Anspruch 1, bei dem die Steuervorrichtung eine auf das bewegliche Zahnrad (7) aufzubringende Kraft verringert, nachdem das Zahnrad des beweglichen Zahnrades (7) die Klaue (64) des zweiten stationären Zahnrades (6) berührt hat, damit diese geringer als eine Kraft ist, die auf das bewegliche Zahnrad (7) ausgeübt wird, bevor der Eingriff zwischen der Klaue (52) des ersten stationären Zahnrades (5) und der Klaue (72) des beweglichen Zahnrades (7) gelöst wird.

5. Getriebe (15) nach Anspruch 1 bei dem die Geschwindigkeitssteuereinheit die Drehzahlsteuerung beendet, nachdem das bewegliche Zahnrad (7) eine vorbestimmte Position erreicht hat und/oder nachdem eine vorgegebene Zeitspanne nach dem Start der Geschwindigkeitssteuerung vergangen ist.

6. Getriebe (15), das beinhaltet:
einen Klauenkupplungs-Übersetzungsmechanismus (30), umfassend
ein erstes stationäres Zahnrad (1h), das zu einer Relativdrehung relativ zu einer Welle in der Lage ist und in der Wellenrichtung nicht beweglich ist,
ein erstes bewegliches Zahnrad (5h), das an der Welle vorgesehen ist, wo das erste stationäre Zahnrad (1h) vorgesehen ist, und zu einer Relativdrehung relativ zu der Welle nicht in der Lage ist und in der Wellenrichtung beweglich ist,
ein zweites stationäres Zahnrad (2h), das zu einer Relativdrehung relativ zu der Welle, wo das erste stationäre Zahnrad (1h) vorgesehen ist, oder einer anderen Welle in der Lage ist und in einer Wellenrichtung unbeweglich ist,
ein zweites bewegliches Zahnrad (6h), das an der Welle vorgesehen ist, wo das zweite stationäre Zahnrad (2h) vorgesehen ist, und zu einer Relativdrehung relativ zu der Welle nicht in der Lage und in der Wellenrichtung beweglich ist, und
eine Schaltnocke (33) zum Bewegen des ersten beweglichen Zahnrades (5h) und des zweiten beweglichen Zahnrades (6h) in der Wellenrichtung, wobei
eine Klaue (39) zum Eingriff mit einer an einer Seitenfläche des ersten stationären Zahnrades (1h) ausgebildeten Klaue (39), um die Drehung der Welle, an der das erste stationäre Zahnrad (1h) vorgesehen ist, auf das erste stationäre Zahnrad (1h) zu übertragen, an einer dem ersten stationären Zahnrad (1h) gegenüberliegenden Seitenfläche des ersten beweglichen Zahnrades (5h) ausgebildet ist,
eine Klaue (39) zum Eingriff mit einem an einer Seitenfläche des zweiten stationären Zahnrades (2h) ausgebildeten Klaue (39), um die Drehung der Welle, an der das zweite stationäre Zahnrad (2h) vorgesehen ist, auf das zweite stationäre Zahnrad (2h) zu übertragen, an einer dem zweiten stationären Zahnrad (2h) gegenüberliegenden Seitenfläche des zweiten beweglichen Zahnrades (6h) ausgebildet ist, und
wenn sich das zweite bewegliche Zahnrad (6h) in Richtung des zweiten stationären Zahnrades (2h) aus einem Zustand bewegt, in dem die Klaue (39) des ersten stationären Zahnrades (1h) mit der Klaue (39) des ersten beweglichen Zahnrades (5h) in Eingriff steht, der Eingriff zwischen der Klaue (39) des ersten stationären Zahnrades (1h) und der Klaue (39) des ersten beweglichen Zahnrades (5h) freigegeben wird und anschließend die Klaue (39) des zweiten beweglichen Zahnrades (6h) mit der Klaue (39) des zweiten stationären Zahnrades (2h) in Eingriff gebracht wird;
ein Stellglied (38) zum Antreiben der Schaltnocke (33); und
**dadurch gekennzeichnet, dass** er umfasst:
eine Steuervorrichtung zum Antreiben des Stellglieds (38) und unter Beziehen von Geschwindigkeitsinformationen, die eine Bewegungsgeschwindigkeit des zweiten beweglichen Zahnrads (6h) anzeigen, Ausführen einer Geschwindigkeitssteuerung, um eine Kraft in Richtung des zweiten stationären Zahnrades (2h) auf das zweite bewegliche Zahnrad (6h) auszuüben, wenn die Bewegungsgeschwindigkeit des zweiten beweglichen Zahnrades (6h), das sich zu dem zweiten stationären Zahnrad (2h) bewegt, kleiner als ein vorbestimmter Wert ist, und eine Kraft, die von dem zweiten stationären Zahnrad (2h) auf das zweite bewegliche Zahnrad (6h) ausgeht, wenn die Bewegungsgeschwindigkeit des zweiten beweglichen Zahnrades (6h), das sich zu dem zweiten stationären Zahnrad (2h) bewegt, größer als der vorbestimmte Wert ist, und
die Steuervorrichtung eine Kraft, die von dem ersten stationären Zahnrad (1h) ausgeht, auf das erste bewegliche Zahnrad (5h) aus einem Zustand ausübt, in dem die Klaue (39) des ersten stationären Zahnrades (1h) mit der Klaue (39) des ersten beweglichen Zahnrades (5h) in Eingriff steht, und
die Geschwindigkeitssteuerung ausführt, nachdem der Eingriff zwischen der Klaue (39) des ersten stationären Zahnrades (1h) und der Klaue (39) des ersten beweglichen Zahnrades (5h) gelöst wurde, und
die Steuervorrichtung Positionsinformationen bezieht, die Positionen des ersten beweglichen Zahnrads (5h) und des zweiten beweglichen Zahnrads (6h) anzeigen,
auf der Grundlage der Positionsinformationen bestimmt, ob der Eingriff zwischen der Klaue (39) des ersten stationären Zahnrades (1h) und der Klaue (39) des ersten beweglichen Zahnrades (5h) freigegeben ist oder nicht, und
die Geschwindigkeitssteuerung bei Bestimmung ausführt, dass der Eingriff zwischen der Klaue (39) des ersten stationären Zahnrades (1h) und der Klaue (39) des ersten beweglichen Zahnrades (5h) freigegeben ist.

7. Getriebe (15) nach Anspruch 1 oder 6, bei dem die Steuervorrichtung Informationen, die einen Drehwinkel des Stellglieds (38) kennzeichnen, als Positionsinformationen bezieht.

8. Getriebe (15) nach Anspruch 6, bei dem die Steuervorrichtung Informationen, die einen Drehwinkel der Schaltnocke (33) kennzeichnen, als Positionsinformationen bezieht.

9. Getriebe (15) nach Anspruch 6, bei dem die Steuervorrichtung die Geschwindigkeitssteuerung nach dem Empfang eines Schaltbefehls ausführt, bis die Klaue (39) des zweiten beweglichen Zahnrades (5h) mit der Klaue (39) des zweiten stationären Zahnrades (2h) in Eingriff steht.

10. Getriebe (15) nach Anspruch 6, bei dem die Steuervorrichtung eine auf das zweite bewegliche Zahnrad (6h) aufzubringende Kraft verringert, nachdem die Klaue (39) des zweiten beweglichen Zahnrades (6h) die Klaue (39) des zweiten beweglichen Zahnrades (2h) berührt hat, damit diese kleiner als eine Kraft ist, die auf das erste bewegliche Zahnrad (5h) ausgeübt werden soll, bevor der Eingriff zwischen der Klaue (39) des ersten stationären Zahnrades (1h) und der Klaue (39) des ersten beweglichen Zahnrades (5h) gelöst wird.

11. Getriebe (15) nach Anspruch 6, bei dem die Geschwindigkeitssteuereinheit die Geschwindigkeitssteuerung beendet, nachdem das zweite bewegliche Zahnrad (6h) eine vorbestimmte Position erreicht hat, und/oder nachdem eine vorbestimmte Zeit seit beginn der Geschwindigkeitssteuerung vergangen ist.

12. Sattelfahrzeug (1) mit einem Getriebe (15) nach einem der vorhergehenden Ansprüche.

## Revendications

1. Transmission (15), comprenant:
un mécanisme de transmission d'embrayage à crabots (30) incluant un premier engrenage stationnaire (5) capable de tourner par rapport à un arbre et incapable de se déplacer dans une direction de l'arbre,
un second engrenage stationnaire (6) capable de tourner par rapport à l'arbre et incapable de se déplacer dans une direction de l'arbre, et
un engrenage mobile (7) prévu sur l'arbre entre le premier engrenage stationnaire (5) et le second engrenage stationnaire (6) et incapable de tourner par rapport à l'arbre et susceptible de se déplacer dans la direction de l'arbre, dans laquelle
un crabot (72) devant être en prise avec un crabot (52) formé sur une surface latérale du premier engrenage stationnaire (5) pour transmettre la rotation de l'arbre au premier engrenage stationnaire (5) est formé sur une surface latérale de l'engrenage mobile (7),
un crabot (74) devant être en prise avec un crabot (64) formé sur une surface latérale du second engrenage stationnaire (6) pour transmettre la rotation de l'arbre au second engrenage stationnaire (6) est formé sur une autre surface latérale de l'engrenage mobile (7), et
lorsque l'engrenage mobile (7) se déplace d'un état dans lequel le crabot (72) de celui-ci est en prise avec le crabot (52) du premier engrenage stationnaire (5) vers le second engrenage stationnaire (6), la prise entre le crabot (52) du premier engrenage stationnaire (5) et le crabot (72) de l'engrenage mobile (7) est relâché et ensuite le crabot (74) de l'engrenage mobile (7) vient en prise avec le crabot (64) du second engrenage stationnaire (6);
un actionneur (38) pour déplacer l'engrenage mobile (7) dans la direction de l'arbre; et
**caractérisée en ce qu'**elle comprend:
un dispositif de commande pour entraîner l'actionneur (38), et tout en obtenant des informations de vitesse indiquant une vitesse de déplacement de l'engrenage mobile (7), pour effectuer une commande de vitesse de manière à appliquer une force vers le premier engrenage stationnaire (5) sur l'engrenage mobile (7) lorsque la vitesse de déplacement de l'engrenage mobile (7) se déplaçant vers le second engrenage stationnaire (6) est supérieure à une valeur prédéterminée et appliquer une force vers le second engrenage stationnaire (6) à l'engrenage mobile (7) lorsque la vitesse de déplacement de l'engrenage mobile (7) se déplaçant vers le second engrenage stationnaire (6) est inférieure à la valeur prédéterminée, et
dans laquelle le dispositif de commande applique la force vers le second engrenage stationnaire (6) à l'engrenage mobile (7), à partir d'un état dans lequel le crabot (52) du premier engrenage stationnaire (5) est en prise avec le crabot (72) de l'engrenage mobile (7), et
effectue la commande de vitesse une fois que la mise en prise entre le crabot (52) du premier engrenage stationnaire (5) et le crabot (72) de l'engrenage mobile (7) est relâchée,
dans laquelle le dispositif de commande obtient des informations de position indiquant une position de l'engrenage mobile (7),
détermine, sur la base des informations de position, si oui ou non la prise entre le crabot (52) du premier engrenage stationnaire (5) et le crabot (72) de l'engrenage mobile (7) est relâchée, et
effectue la commande de vitesse une fois que l'on a déterminé que la mise en prise entre le crabot (52) du premier engrenage stationnaire (5) et le crabot (72) de l'engrenage mobile (7) était relâchée.

2. Transmission (15) selon la revendication 1, dans laquelle
le mécanisme de transmission (15) inclut en outre une came de changement de vitesse (33) pour convertir la rotation de l'actionneur (38) en mouvement de l'engrenage mobile (7) et
le dispositif de commande obtient des informations indiquant un angle de rotation de la came de changement de vitesse (33) comme information de position.

3. Transmission (15) selon la revendication 1, dans laquelle le dispositif de commande effectue la commande de vitesse après réception d'une instruction de changement de vitesse jusqu'à ce que le crabot (74) de l'engrenage mobile (7) vienne en prise avec le crabot (64) du second engrenage stationnaire (6).

4. Transmission (15) selon la revendication 1, dans lequel le dispositif de commande réduit une force à appliquer à l'engrenage mobile (7) lorsque le crabot (39) de l'engrenage mobile (7) vient au contact du crabot (64) du second engrenage stationnaire (6) pour que ladite force soit inférieure à la force à appliquer à l'engrenage mobile (7) avant que la mise en prise entre le crabot (52) du premier engrenage stationnaire (5) et le crabot (72) de l'engrenage mobile (7) ne soit relâchée.

5. Transmission (15) selon la revendication 1, dans laquelle l'unité de commande de vitesse termine la commande de vitesse une fois que l'engrenage mobile (7) a atteint une position prédéterminée, et/ou après l'écoulement d'une période de temps prédéterminée après le début de la commande de vitesse.

6. Transmission (15), comprenant:
un mécanisme de transmission d'embrayage à crabots (30), incluant un premier engrenage fixe (1h) capable de tourner par rapport à un arbre et incapable de se déplacer dans la direction de l'arbre,
un premier engrenage mobile (5h) prévu sur l'arbre à l'emplacement du premier engrenage stationnaire (1h), et incapable de tourner par rapport à l'arbre et susceptible de se déplacer dans la direction de l'arbre,
un second engrenage stationnaire (2h) susceptible de tourner par rapport à l'arbre à l'emplacement du premier engrenage stationnaire (1h) ou d'un autre arbre, et incapable de se déplacer dans une direction de l'arbre,
un second engrenage mobile (6h) prévu sur l'arbre à l'emplacement du second engrenage stationnaire (2h), et incapable de tourner par rapport à l'arbre et susceptible de se déplacer dans la direction de l'arbre, et
une came de changement de vitesse (33) pour déplacer le premier engrenage mobile (5h) et le second engrenage mobile (6h) dans la direction de l'arbre, dans laquelle
un crabot (39) devant être en prise avec un crabot (39) formé sur une surface latérale du premier engrenage stationnaire (1h) pour transmettre la rotation de l'arbre à l'emplacement du premier engrenage stationnaire (1h), au premier engrenage stationnaire (1h), est formé sur une surface latérale du premier engrenage mobile (5h) qui est opposé au premier engrenage stationnaire (1h),
un crabot (39) pour être en prise avec un crabot (39) formé sur une surface latérale du second engrenage stationnaire (2h) pour transmettre la rotation de l'arbre à l'emplacement du second engrenage stationnaire (2h), au second engrenage stationnaire (2h), est formé sur une surface latérale du second engrenage mobile (6h) qui est opposée au second engrenage stationnaire (2h), et lorsque le second engrenage mobile (6h) se déplace vers le second engrenage stationnaire (2h) à partir d'un état dans lequel le crabot (39) du premier engrenage stationnaire (1h) en prise avec le crabot (39) du premier engrenage mobile (5h), la prise entre le crabot (39) du premier engrenage stationnaire (1h) et le crabot (39) du premier engrenage mobile (5h) est relâchée et par la suite le crabot (39) du seconde engrenage mobile (6h) est en prise avec le crabot (39) du second engrenage stationnaire (2h);
un actionneur (38) pour entraîner la came de changement de vitesse (33); et
**caractérisée en ce qu'**elle comprend:
un dispositif de commande pour entraîner l'actionneur (38), et tout en obtenant des informations de vitesse indiquant une vitesse de déplacement du second l'engrenage mobile (6h), pour effectuer une commande de vitesse de manière à appliquer une force vers le second engrenage stationnaire (2h), au second engrenage mobile (6h) lorsque la vitesse de déplacement du second engrenage mobile (6h) se déplaçant vers le second engrenage stationnaire (2h) est inférieure à une valeur prédéterminée et appliquer une force depuis le second engrenage stationnaire (2h) vers le second engrenage mobile (6h) lorsque la vitesse de déplacement de l'engrenage mobile (6h) se déplaçant vers le second engrenage stationnaire (2h) est inférieure à la valeur prédéterminée, et
dans laquelle le dispositif de commande applique la force vers le second engrenage stationnaire (1h) à l'engrenage mobile (5h), à partir d'un état dans lequel le crabot (39) du premier engrenage stationnaire (1h) est en prise avec le crabot (39) du premier engrenage mobile (5h), et
effectue la commande de vitesse une fois que la mise en prise entre le crabot (39) du premier engrenage stationnaire (1h) et le crabot (39) du premier engrenage mobile (5h) est relâchée,
dans laquelle le dispositif de commande obtient des informations de position indiquant la position du premier engrenage mobile (5h) et la position du premier engrenage mobile (6h),
détermine, sur la base des informations de position, si oui ou non la prise entre le crabot (39) du premier engrenage stationnaire (1h) et le crabot (39) du premier engrenage mobile (5h) est relâchée, et
effectue la commande de vitesse une fois que l'on a déterminé que la mise en prise entre le crabot (39) du premier engrenage stationnaire (1h) et le crabot (39) du premier engrenage mobile (5h) était relâchée.

7. Transmission (15) selon les revendications 1 ou 6, dans laquelle le dispositif de commande obtient des informations indiquant un angle de rotation de l'actionneur (38) comme informations de position.

8. Transmission (15) selon la revendication 6, dans laquelle le dispositif de commande obtient des informations indiquant un angle de rotation de la came de changement de vitesse (38) comme informations de position.

9. Transmission (15) selon la revendication 6, dans laquelle le dispositif de commande effectue la commande de vitesse après réception d'une instruction de changement de vitesse jusqu'à ce que le crabot (39) de l'engrenage mobile (5h) vienne en prise avec le crabot (39) du second engrenage stationnaire (2h).

10. Transmission (15) selon la revendication 6, dans lequel le dispositif de commande réduit une force à appliquer au second engrenage mobile (7) une fois que le crabot (39) du second engrenage mobile (7) est venu au contact du crabot (64) du second engrenage stationnaire (6) pour que ladite force soit inférieure à la force à appliquer au premier engrenage mobile (7) avant que la mise en prise entre le crabot (39) du premier engrenage stationnaire (1h) et le crabot (39) du premier engrenage mobile (5h) ne soit relâchée.

11. Transmission (15) selon la revendication 6, dans laquelle l'unité de commande de vitesse met fin à la commande de vitesse une fois que le second engrenage mobile (6h) a atteint une position prédéterminée, et/ou après l'écoulement d'une période de temps prédéterminée après le début de la commande de vitesse.

12. Véhicule de type à enfourcher (1) comprenant une transmission (15) selon l'une quelconque des revendications précédentes.
